# EUROPÄISCHE PATENTSCHRIFT

(11) **EP 0 835 803 B1**
(45) Veröffentlichungstag und Bekanntmachung des Hinweises auf die Patenterteilung: **22.09.2004**
(21) Anmeldenummer: 97117219.2
(22) Anmeldetag: 04.10.1997
(51) Int. Cl.: B64D 13/08

(54) **Lüftungssystem zur Klimatisierung eines Grossraumpassagierflugzeuges**
Ventilation system for airconditioning a wide body aircraft
Système de ventilation pour la climatisation d'un avion gros porteur

(30) Priorität: 12.10.1996 DE 19642203
(43) Veröffentlichungstag der Anmeldung: 15.04.1998
(73) Patentinhaber: Airbus Deutschland GmbH, 21129 Hamburg (DE)
(72) Erfinder: Scherer, Thomas, Dr.-Ing., 22559 Hamburg (DE); Buchholz, Uwe, Dipl.-Ing., 21640 Bliedersdorf (DE)
(74) Vertreter: Hansmann, Dierk, Dipl.-Ing.

(56) Entgegenhaltungen:
- EP-A- 0 301 606
- EP-A- 0 382 604
- US-A- 5 545 084

## Beschreibung

Die Erfindung bezieht sich auf ein Lüftungssystem zur Klimatisierung eines Großraumpassagierflugzeuges gemäß dem Oberbegriff des Anspruchs 1.

Eine bekannte Vorgehensweise bei der Klimatisierung von Flugzeugkabinen geläufiger Passagierflugzeuge besteht darin, daß im oberen Deckenbereich einer Passagierkabine temperaturgeregelte Mischluft eingeblasen wird. Die verbrauchte Mischluft durchströmt den Kabinenbereich und verläßt die Kabine einerseits über nahe dem oder unmittelbar in den Kabinenboden eingelassene und unterhalb diesem befindliche Abluftquerschnitte. Dieser Teil der verbrauchten Kabinenluft wird dem (den längsverteilt) im Flugzeugrumpf angeordneten Ausström- bzw. Abluftventile(n) zugeleitet, das (die) dann die Abluft (druckgeregelt) an die äußere Umgebung nach außerhalb des Flugzeuges abführt (abführen). Andererseits wird ein weiterer Teil der verbrauchten Kabinenluft dem obereren Kabinenbereich konstant entzogen, der danach mit Frischluft (von den Klimakühlaggregaten) gemischt als aufbereitete Rezirkulationsluft über Deckeneinlässe in die Passagierkabine eingeblasen wird. Es ist auch bekannt, daß die Mischluft, nachdem sie die Passagierkabine durch die Abluftquerschnitte verlassen hat, teilweise wieder durch ein Gebläse angesaugt und mit der erwähnten Frischluft gemischt als aufbereitete Rezirkulationsluft (in einem Kreislauf) der Flugzeugkabine (wie vorbeschrieben) zugeführt wird.

Es handelt sich dabei um die Luftverteilung einetagiger Passagierdecks eines Flugzeuges, deren Luftverteilung sich gegenüber (im Vergleich) der Lösung einer Mehrdeckluftverteilung bei ausgeglichenen Druckverhältnissen zwischen mehreren Passagierdecks, die über Treppenaufgänge verbunden sind, unterscheidet. Bei den Klimatisierung bekannter einetagiger Passagierdecks eines Flugzeuges erzeugt das Durchströmen der verbrauchten Passagierluft durch die Abluftquerschnitte einen Widerstand, der zu einem Druckaufbau im Kabinenbereich führt. Die Kabine stellt eine Druckkammer dar, welche längsachsenverteilt dem Flugzeugrumpf gleichmäßig mit Abluftquerschnitten versehen ist. Demzufolge durchströmt die eingeblasene Mischluftmenge (mit Frischluft gemischte aufbereitete Rezirkulationsluft) immer den gleichen Kabinenquerschnitt. Ein Luftaustausch zu benachbarten Kabinenquerschnitten (Kabinenlängsströmung) wird vermieden.

Bekanntermaßen sind bei Flugzeugrümpfen, die mit einer Mehrdeckkonfiguration ausgerüstet sind, mehrere Flugzeugkabinen übereinander angeordnet, die über große Treppenhäuser bzw. Treppenaufgänge miteinander verbunden sind. Das Durchströmverhalten der Luft durch die obere Passagierkabine eines aus mehreren Decks aufgebauten Passagierflugzeuges würde sich nachteilig verändern, sofern man diese Flugzeugkabinen-nach dem bekannten Stand der Technik - klimatisiert. Da der Widerstand infolge der Treppenhausverbindung zwischen den einzelnen Decks (Mehrdeckkonfiguration) bei Luftdurchströmung um ein vielfaches kleiner ist als der Widerstand der Abluftquerschnitte des Flugzeuges, wird die eingeblasene recycelte Mischluft der oberen (Druck-)Kabine zum größten Teil über die Treppenhäuser entweichen. Danach würden große Längsströmungen in dieser Kabine einsetzen, wobei gleichsam nachteiligerweise Temperaturschichtungs- und Passagierkomfortprobleme erzeugt werden. Diese Probleme würden sich noch verstärken, falls die Frischluftmengenzufuhr variabel eingestellt wird.

Nach der DE 44 25 871 A1 ist eine Lösung bekannt, bei der die Klimatisierung eines Mehrdeckflugzeuges mit zwei übereinander angeordneten Passagierdecks betrieben wird. Für jede Passagierkabine sind separate Klimakreisläufe vorgesehen. Dabei wird die dem Hauptdeck abgeführte verbrauchte Passagierluft zunächst einem Recycling unterzogen, die dann mit aufbereiteter Triebwerks-Zapfluft vorgemischt wird und danach einer lokalen Mischkammer zugeleitet wird. In diese Mischkammer wird weiterhin die verbrauchte Passagierluft des (über dem Hauptdeck angeordneten) Oberdecks, die vorher auch einem Recycling unterzogen wurde, geleitet. Die Mischkammer besitzt zwei Abgänge, die jeweils getrennt mit den Lufteinlässen des Ober- bzw. Hauptdecks verbunden sind. Dabei wird die ausgangsseitig bereitgestellte (und so aufbereitete) Rezirkulationsluft zu Teilen in die deckgetrennten Passagierkabinen eingeleitet. Bei dieser Lösung wird die mit einem Gebläse abgesaugte Luftmenge aus dem Oberdeck nicht dem Luftstrom entsprechen, der dem Oberdeck zugeführt wird. Somit wird sich zwangsläufig ein Über- oder Unterdruck im Oberdeck einstellen, der zu einem nicht gewünschten Luftaustausch zwischen dem Ober- und Unterdeck führen würde, sofern die beiden Decks durch ein Treppenhaus oder einen Treppenaufgang verbunden wären. Weiterhin sieht die Lösung vor, das die Abluft des Oberdecks mit der Abluft des Hauptdecks in einer gemeinsamen lokalen Mischkammer gemischt und danach verzweigt wird.

Deshalb wären dem betreffenden Mischkammerabgang ungünstig große Rohrquerschnitte (-innendurchmesser) abzuführen, die einen erhöhten Platzbedarf beanspruchen und zudem das Gewicht und den Kraftstoffverbrauch eines Mehrdeck-Passagierflugzeuges ungünstig beeinflussen würden.

Demzufolge liegt der Erfindung die Aufgabe zugrunde, ein gattungsgemäßes Lüftungssystem zur Klimatisierung eines Großraumpassagierflugzeuges, bei dem mehrere Passagierdecks über Treppenhäuser oder -aufgänge verbunden sind, derart zu gestalten, daß mit ihm bei ausgeglichenen Druckverhältnissen zwischen den Passagierdecks ein Luftaustausch über die Treppenhaus- oder Treppenaufgangsverbindungen ausgeschlossen wird. Dabei soll eine gleichmäßige Durchströmung aller Kabinenquerschnitte (über die Kabinenlänge) ohne bereichsübergreifende Kabinenlängsströmung (entlang der Rumpflängsachse) erreicht werden, wobei Temperaturschichtungsprobleme, die einen nachteiligen Einfluß auf den Passagierkomfort ausüben würden, gänzlich auszuschließen sind. Das Verlegen ungünstiger Leitungsquerschnitte der Luftstromverbindungen, die Einfluß auf das Gesamtgewicht und den Kraftstoffverbrauch des materialintensiven Großraumpassagierflugzeuges besitzen, soll vermieden werden.

Diese Aufgabe wird durch die im Anspruch 1 angegebenen Maßnahmen gelöst.

Die Erfindung ist in einem Ausführungsbeispiel anhand der Zeichnung näher beschrieben.

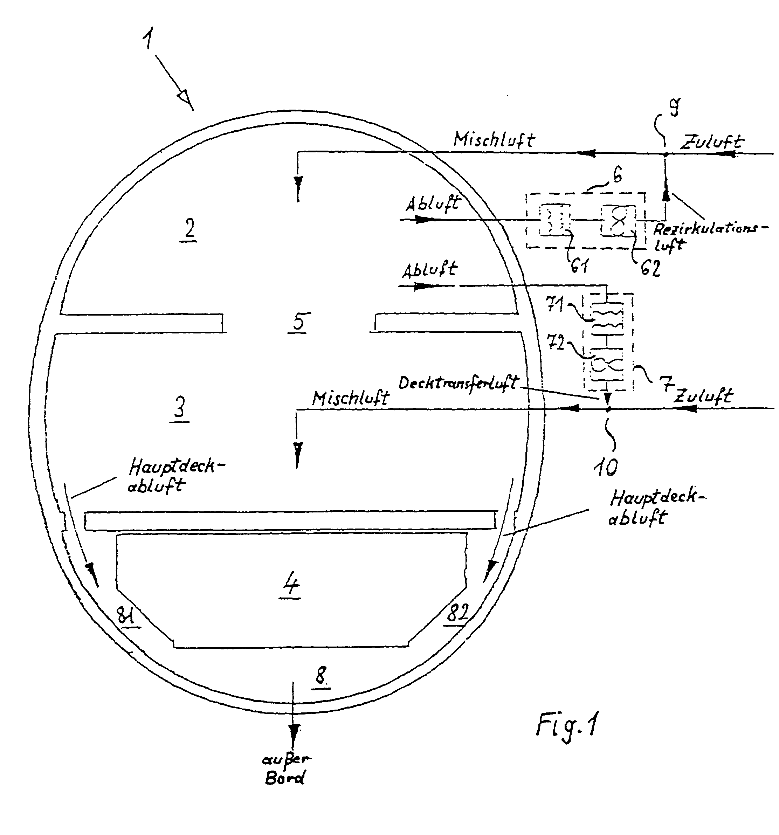

Die Fig. 1 zeigt eine Übersicht des Lüftungssystem zur Klimatisierung des Großraumpassagierflugzeuges, dessen Flugzeug-Druckrumpf 1 in mehrere Decks unterteilt ist. Dabei schließt der Rumpfquerschnitt einen Ober- und einen Hauptdeckbereich 2, 3 für Passagiere, einen Unterdeckbereich 4 für begleitendes Fracht- und Ladegut und einen diesem darunter gelegenen Abluftbereich 8 ein. Der Ober- und Hauptdeckbereich 2, 3 und der Abluftbereich 8 stellen funktionell eine Druckkabine dar. Eine kanalartige Druckkammerverbindung 5, die ein für Flugpassagiere benutzbares Treppenhaus oder einen Treppenaufgang aufnimmt, vereint den Ober- und Hauptdeckbereich 2, 3 miteinander. Beide Deckenbereiche schließen einen Passagierbereich ein, der gemeinsam klimatisiert wird. Das Luftrecycling des zu klimatisierenden Passagierbereiches wird mit zwei Recyclingeinheiten 6, 7 betrieben.
Die Recyclingeinheiten 6, 7 bestehen einheitlich aus einer Filtereinheit 61, 71, welche sich aus mehreren in Reihe geschalteten zweckbestimmten Filtern zur Beseitigung von Partikeln, Gerüchen und Keime sonstigen Verschmutzungen (toxische Stoffe ect.) aus der verbrauchten Abluft der Passagierkabine aufbaut, und einer Gebläseeinheit 62, 72 zur Luftansaugung der Kabinenabluft zusammensetzt, die luftstrombezogen in Reihe verbunden sind. Die betreffende Gebläseeinheit 62, 72 besteht aus wenigstens einem Lüfter, der drehzahlgeregelt arbeitet. Mit der charakteristischen Drehzahlregelung der Gebläseeinheit 62, 72 läßt sich der entlüftete (abgesaugte) und korrelativ der belüftende (eingeblasene) Volumenstrom der Luft genauestens regulieren, worauf später eingegangen wird. Es wird ergänzt, daß die Filtereinheit 61, 71 auf den Eingang und die Gebläseeinheit 62, 72 auf den Ausgang der Recyclingeinheit (6; 7) geschalten ist.

Die Lösung sieht vor, daß der Oberdeckbereich 2 mit einer ersten und einer zweiten Recyclingeinheit 6, 7 verbunden ist. Beide Recyclingeinheiten 6, 7 nehmen eingangsseitig eine Teilmenge (einen Anteil der Gesamtmenge) der verbrauchten Kabinenluft des Oberdeckbereiches (2) als Rezirkulationsluft auf. Dabei ist die erste Recyclingeinheit 6 mit einem (nicht gezeigten) oberen Deckenauslaß, der beispielsweise oberhalb eines Hatrackkastens und nahe einer Deckenverkleidung in der Seitenwandverkleidung der Kabine liegen kann, verbunden.

Die zweite Recyclingeinheit 7 steht mit einem (nicht gezeigten) Luftauslaß in Verbindung, der sich nahe dem Bodenbereich des Oberdeckbereiches 2 in der Seitenwandverkleidung der Kabine befindet. Weiterhin ist der Ausgang der ersten Recyclingeinheit 6 mit einer ersten funktionellen Schnittstelle 9 und der Ausgang der zweiten Recyclingeinheit 7 mit einer zweiten funktionellen Schnittstelle 10 verbunden.

Diesen separaten funktionellen Schnittstellen 9, 10 ist schnittstellenbezogen eine (nicht gezeigte) Mischeinheit integriert. Die Schnittstellen 9, 10 sind jeweils an eine Frischluftleitung angeschlossen sind, über die ihnen extern bezogene temperierte Frischluft zugeführt wird. Da die beiden Recyclingeinheiten 6, 7 ausgangsseitig aufbereitete (gefilterte) Rezirkulationsluft bereitstellen, wird diese Rezirkulationsluft nach Erreichen der betreffenden Schnittstelle 9, 10 mittels der Mischeinheit mit Frischluft vermischt wird.
Das Lüftungssytem wird derart ergänzt, wonach die erste Schnittstelle 9 mit dem Oberdeckbereich 2 und die zweite Schnittstelle 10 mit dem Hauptdeckbereich 3 verbunden ist. Damit wird dem Klimabereich (Oberdeck- und Hauptdeckbereich) bereichsweise getrennt die schnittstellenbezogene Mischluft über separaten Verbindungen zugeführt. Die der ersten Schnittstelle 9 abgehende mischluftführende Leitung ist mit einem (nicht gezeigten) Deckeneinlaß, der etwa in Mitte der Deckenverkleidung des Oberdecks 2 eingelassen ist, verbunden. Die der zweiten Schnittstelle 10 abgehende mischluftführende Leitung ist mit einem (nicht gezeigten) Deckeneinlaß, der beispielsweise oberhalb eines Hatrackkastens und nahe einer Deckenverkleidung in der Seitenwandverkleidung des Hauptdeckbereiches 3 eingelassen ist, verbunden.

Die verbrauchte Abluft des Hauptdeckbereichs 3 wird über wenigstens einen Abluftkanal 81, 82 entlüftet, der in einen Abluftbereich 8 des Flugzeuges mündet. Dabei mündet in den Hauptdeckbereich 3 jeweils links- und rechtseitig und nahe dessen Seitenwandverkleidung ein Abluftkanal 81, 82, der den Abluftbereich 8 mit dem Hauptdeckbereich 3 luftstrombezogen verbindet. Der Querschnitt des betreffenden Abluftkanals 81, 82 führt seitlich am Unterflurbereich 4 vorbei. Er wird durch die Seitenwandverkleidung unterhalb des Hauptdeckbereiches 3 begrenzt.

Die im Hauptdeckbereich 3 verbrauchte Kabinenabluft, die den verbleibenden Teil der im Klimabereich verbrauchten Abluft darstellt, wird nach ihrem Einströmen in den Abluftbereich (8) den Flugzeug-Druckrumpf 1 über wenigstens ein (nicht gezeigtes) Ausströmventil das Flugzeug verlassen, welches im Bodenbereich des Flugzeug-Druckrumpfes installiert ist.
Es wird erwähnt, daß (allgemein) alle in einen Luftstrom einbezogenen Recyclingeinheiten 6, 7 und Verbindungen mittels Luftstromverbindungsleitungen oder -kanäle realisiert sind.

Zusammengefaßt wird in den Oberdeckbereich 2 zur Klimatisierung temparaturgeregelte Mischluft eingeblasen. Der Rezirkulationsanteil der Mischluft wird dabei diesem Bereich direkt entnommen, indem die Gebläseeinheit 62 der ersten Recyclingeinheit 6 die verbrauchte (und vorher durch die Filtereinheit 61 gereinigte) Kabinenabluft ansaugt und danach der schnittstellenbezogenen Zuluft [(Oberdeck-)Frischluft] beimischt. Um einen Druckaufbau oder Druckabbau in der oberen Druckkabine (Oberdeckbereich 2) zu verhindern, wird wenigstens mit dem drehzahlgeregelten Gebläse 72 (der Recyclingeinheit 7) genau die dem Oberdeck zugeführte Frischluftmenge wieder entnommen. Dabei wird durch geregelte Absaugung eine ausgeglichene Volumenstrombilanz (Zuluftmenge = Abluftmenge = konstant) des Oberdeckbereiches 2 erreicht. Diese dem Oberdeckbereich 2 entnommene Kabinenabluft wird über die Filtereinheit 71 der zweiten Recyclingeinheit 7, die nach dem Absaugen (vorher) diese Abluft reinigt, der schnittstellenbezogenen (Hauptdeck-)Frischluft als aufbereitete Rezirkulationsluft (Decktransferluft) zugemischt. Diese temperaturgeregelte (Hauptdeck-)Mischluft durchströmt den Hauptdeckbereich 3 und verläßt ihn über die Abluftquerschnitte. Der Abtransport dieser (Hauptdeck-)Abluft nach außerhalb des Flugzeug-Druckrumpfes 1 erfolgt durch den Abluftbereich 8 (die Abluftdruckkammer) unterhalb des Hauptdeckbereiches 3, von da aus sie über ein (nicht gezeigtes geregeltes) Ausströmventil den Flugzeug-Druckrumpf 1 verläßt.
Durch die Anwendung der Lösung wird der Luftaustausch über die kanalartige Druckkammerverbindung 5 (Treppenhaus bzw. Aufgang) vermieden sowie eine gleichmäßige Durchströmung aller belüfteten Passagierkabinenquerschnitte ohne Kabinenlängsströmung erreicht. Infolge dessen läßt sich eine gleichmäßige Kabinenquerschnittsdurchströmung über die Kabinenlänge einstellen. 10.10.96

Die angestrebte Kabinendurchströmung wird durch die Anordnung der Kabinenlufteinund auslässe in einem Kabinenquerschnitt bestimmt. Dabei wird die dem Oberdeckbereich 2 entnommene Abluft als Rezirkulationsluft für den Hauptdeckbereich 3 genutzt.

Mit der Lösung wird demonstriert, daß der beim Durchströmen der Abluftquerschnitte entstehende Druckaufbau im Hauptdeckbereich 3 sich gleichmäßig über die kanalartige Druckkammerverbindung 5 (Treppenhaus, Verkleidungsschlitze) auf den gesamten Passagierbereich (Ober- und Hauptdeckbereich 2, 3) ausgleicht und ausgeglichene Druckkammerinnendrücke garantiert. Unabhängig der Größe des zugeführten Frischluftanteils bzw. der eingeblasenen (Misch-)Luftmengen weisen die beiden Bereiche den gleichen Druckkammer-Innendruck auf; die Innendrücke der beiden Druckkammern sind gegeneinander immer ausgeglichen.

## Patentansprüche

1. Lüftungs- und Klimatisierungssystem eines Großraumpassagierflugzeuges, bei dem ein FlugzeugOruckrumpf in mehrere Decks unterteilt ist, dessen Rumpfquerschnitt wenigstens einen Ober- und einen Hauptdeckbereich (2, 3) für Passagiere, einen Unterdeckbereich (4) für begleitendes Fracht- und Ladegut und einen diesem darunter gelegenen Abluftbereich (8) einschließt, wobei der Ober- und Hauptdeckbereich (2, 3), die miteinander durch wenigstens eine kanalartige Druckkammerverbindung (5) verbunden sind und einen gemeinsamen Klimabereich einschließen, und der Abluftbereich (8) funktionell eine Druckkabine darstellen, bei dem der Oberdeckbereich (2) mit dem Eingang einer ersten und einer zweiten Recyclingeinheit (6, 7), die beide eingangsseitig einen Teil der verbrauchten Kabinenluft des Oberdeckbereiches (2) als Rezirkulationsluft aufnehmen, verbunden ist, und die erste Recyclingeinheit (6) ausgangsseitig mit einer ersten separaten funktionellen Schnittstelle (9) sowie die zweite Recyclingeinheit (7) ausgangsseitig mit einer zweiten separaten funktionellen Schnittstelle (10) verbunden ist, denen schnittstellenbezogen jeweils eine Mischeinneit integriert ist, wobei die Mischeinheit der ersten funktionellen Schnittstelle (9) eingangsseitig mit dem Ausgang der ersten Recyclingeinheit (6) und die Mischeinheit der zweiten funktionellen Schnittstelle (10) eingangsseitig mit dem Ausgang der zweiten Recyclingeinheit (7) verbunden ist, und wobei der Ausgang der Mischeinheit der ersten funktionellen Schnittstelle (9) über eine mischluftführende Leitung und der Eingang der zweiten Recyclingeinheit (7) über eine rezirkulationsluftführende Leitung mit dem Oberdeckbereich (2) verbunden ist, und wobei außerdem die betreffende Mischeinheit der ersten und zweiten funktionellen Schnittstelle (9, 10) eingangsseitig an eine Frischluftleitung, über die eine extern bezogene Frischluft zugeführt wird, angeschlossen ist, bei dem weiterhin die betreffende Mischeinheit der ersten und zweiten funktionellen Schnittstelle (9, 10) einen Teil der ausgangsseitig der betreffenden Recyclingeinheit (6, 7) bereitgestellten aufbereiteten Rezirkulationsluft, die als verbrauchte Kabinenluft des Oberdeckbereiches (2) über die rezirkulationsluftführende Leitung eingangsseitig der betreffenden Recyclingeinheit (6, 7) als Rezirkulationsluft aufgenommen und von dieser aufbereitet wird, mit der bezogenen Frischluft vermischt, die nach geschehenem Mischvorgang ausgangsseitig der beiden funktionellen Schnittstellen (9, 10) als Mischluft bereitgestellt wird, wobei das Luftrecycling des Klimabereiches mit den beiden Recydingeinheiten (6, 7), denen eine Gebläseeinheit (62, 72) integriert ist, umgesetzt wird, bei dem in den Hauptdeckbereich (3) wenigstens ein Abluftkanal (81, 82) mündet, mit dem der Abluftbereich (8) luftstrombezogen verbunden ist, durch den ein Teil der im Klimabereich verbrauchten Abluft als Kabinenluft den Abluftbereich (8) erreicht, die über wenigstens ein im Flugzeug-Druckrumpf installiertes Ausströmventil das Flugzeug verlässt, bei dem die in einen Luftstrom einbezogenen Recyclingeinheiten (6, 7) und Verbindungen mittels Luftstromverbindungsleitungen oder - kanäle realisiert sind.
**dadurch gekennzeichnet, dass** der schnittstellenbezogenen Mischeinheit der zweiten funktionellen Schnittstelle (10) ausgangsseitig eine mischluftführende Leitung angeschlossen ist, die dem Hauptdeckbereich (3) verbunden ist, dass die Gebläseeinheiten (62, 72) der beiden Recyclingeinheiten (6, 7) mit wenigstens einem drehzahlgeregelten Lüfter ausgestattet sind, mit dem sich der Volumenstrom der aus dem Oberdeckbereich (2) abgesaugten Kabinenluft und der in den Klimabereich eingeblasenen Mischluft genauestens regeln lässt, wobei wenigstens mit dem drehzahlgeregelten Gebläse (72) der zweiten Recyclingeinheit (7) genau die dem Oberdeckbereich (2) von der ersten funktionellen Schnittstelle (9) zugeführte Frischluft abgesaugt wird, um eine ausgeglichene Volumenstrombilanz des Oberdeckbereichs (2) umzusetzen und einen Druckaufbau oder Druckabbau im Oberdeckbereich (2) zu verhindern, wodurch über die Druckkammerverbindung (5) ein Luftaustausch vermieden wird.

## Claims

1. Ventilation and air-conditioning system of a passenger jumbo jet, in which a pressurized aircraft fuselage is divided into several decks, the fuselage cross-section of which includes at least an upper and a main deck area (2, 3) for passengers, a lower deck area (4) for accompanying freight and an outgoing air area (8) situated below this, the upper and main deck areas (2, 3), which are connected to one another by at least one channel-like pressurized chamber connection (5) and enclose a common climatic area, and the outgoing air area (8) functionally representing a pressurized cabin, in which system the upper deck area (2) is connected to the input of a first and a second recycling unit (6, 7), which both take up on the input side a portion of the used cabin air of the upper deck area (2) as recirculation air, and the first recycling unit (6) is connected on the output side to a first separate functional interface (9) and the second recycling unit (7) is connected on the output side to a second separate functional interface (10), into which a mixing unit is integrated in each case relative to the interface, the mixing unit of the first functional interface (9) being connected on the input side to the output of the first recycling unit (6) and the mixing unit of the second functional interface (10) being connected on the input side to the output of the second recycling unit (7), and the output of the mixing unit of the first functional interface (9) being connected via a line carrying mixed air and the input of the second recycling unit (7) being connected via a line carrying recirculation air to the upper deck area (2), and the relevant mixing unit of the first and second functional interface (9, 10) also being connected on the input side to a fresh air line, via which fresh air obtained externally is supplied, in which system furthermore the relevant mixing unit of the first and second functional interface (9, 10) mixes a portion of the conditioned recirculation air supplied on the output side of the relevant recycling unit (6, 7), which air as used cabin air of the upper deck area (2) is taken up via the line carrying recirculation air on the input side of the relevant recycling unit (6, 7) as recirculation air and conditioned by this, with the fresh air obtained, which is supplied after the mixing process has taken place on the output side of the two functional interfaces (9, 10) as mixed air, the air recycling of the climatic area being realized by the two recycling units (6, 7), into which a fan unit (62, 72) is integrated, in which system at least one outgoing air duct (81, 82) opens into the main deck area (3), to which duct the outgoing air area (8) is connected in an airflow-related manner and through which a portion of the outgoing air used in the climatic area as cabin air reaches the outgoing air area (8), which air leaves the aircraft via at least one discharge valve installed in the pressurized aircraft fuselage, in which system the recycling units (6, 7) included in an air flow and connections are realized by means of air flow connecting lines or ducts, **characterized in that** connected to the interface-related mixing unit of the second functional interface (10) on the output side is a line carrying mixed air, which line is connected to the main deck area (3), that the fan units (62, 72) of the two recycling units (6, 7) are fitted with at least one speed-controlled fan, with which the volume flow of the cabin air removed by suction from the upper deck area (2) and the mixed air blown into the climatic area can be regulated as precisely as possible, the mixed air supplied to the upper deck area (2) by the first functional interface (9) being removed exactly at least by the speed-controlled fan (72) of the second recycling unit (7), in order to realize an even volume flow balance of the upper deck area (2) and to prevent a pressure build-up or pressure reduction in the upper deck area (2), due to which an exchange of air via the pressurized chamber connection (5) is avoided.

## Revendications

1. Système d'aération et de climatisation d'un avion de passagers gros porteur, dans lequel un fuselage d'avion pressurisé est subdivisé en plusieurs ponts, comprenant en section transversale au moins une zone de pont supérieur et une zone de pont inférieur (2, 3) pour les passagers, une zone de pont inférieur (4) pour les bagages accompagnés et les marchandises et une zone d'évacuation d'air (8) située derrière cette dernière zone, la zone de pont supérieur et la zone de pont principal (2, 3), qui sont reliées l'une à l'autre par un passage de liaison pressurisé (5) en forme de canal et renferment une zone de climatisation commune, et la zone d'évacuation d'air (8) représentant au plan fonctionnel une cabine pressurisée, dans laquelle la zone de pont supérieur (2) est reliée à l'entrée d'une première et d'une seconde unité de recyclage (6, 7), qui reçoivent toutes deux, côté entrée, une partie de l'air usé de la zone de pont supérieur (2) de la cabine comme air de recirculation, la première unité de recyclage (6) étant reliée, côté sortie, à une première interface fonctionnelle séparée (9), tandis que la seconde unité de recyclage (7) est reliée, côté sortie, à une seconde interface fonctionnelle séparée (10), interfaces auxquelles est intégrée, respectivement, une unité de mélange, où l'unité de mélange de la première interface fonctionnelle est reliée, côté entrée, à la sortie de la première unité de recyclage (6) et l'unité de mélange de la seconde interface fonctionnelle (10) est reliée, côté entrée, à la sortie de la seconde unité de recyclage (7), et où la sortie de l'unité de mélange de la première interface fonctionnelle (9), via une conduite d'acheminement d'air mélangé, et l'entrée de la seconde unité de recyclage (7), via une conduite d'acheminement d'air de recirculation, sont reliées à la zone de pont supérieur (2), tandis qu'en outre, les unités de mélange concernées de la première et de la seconde interface fonctionnelle (9, 10) sont raccordées, côté entrée, à une conduite d'air frais par laquelle est acheminé de l'air frais extérieur, où, par ailleurs, les unités de mélange concernées des première et seconde interfaces fonctionnelles (9, 10) mélangent une partie de l'air de recirculation récupéré côté sortie de l'unité de recyclage concernée (6, 7), qui est reçu, comme air usé de la zone de pont supérieur (2) de la cabine, via la conduite d'acheminement d'air de recirculation, côté entrée de l'unité de recyclage concernée (6, 7) pour servir d'air de recirculation et y est traité, à l'air frais concerné, qui est converti en air mélangé après l'opération de mélange qui s'y est produite, côté sortie des deux interfaces fonctionnelles (9, 10), où le recyclage de l'air de la zone de climatisation est effectué avec les deux unités de recyclage (6, 7) auxquelles une unité de soufflerie (62, 72) est intégrée, où dans la zone de pont principal débouche au moins un canal d'évacuation d'air (81, 82) auquel est reliée, dans le sens d'écoulement de l'air, la zone d'évacuation d'air (8), à travers lequel canal une partie de l'air usé dans la zone de climatisation atteint, comme air de cabine, la zone d'évacuation d'air (8), ledit air quittant l'appareil via au moins une soupape de décharge installée dans le fuselage pressurisé de l'avion, et où les unités de recyclage (6, 7) et les raccordements inclus dans un courant d'air sont réalisés au moyen de conduites ou canaux de raccordement de courant d'air,
**caractérisé en ce qu'**à l'unité de mélange de la seconde interface fonctionnelle (10) est raccordée, côté sortie, une conduite d'acheminement d'air mélangé qui est reliée à la zone de pont principal (3), **en ce que** les unités de soufflerie (62, 72) des deux unités de recyclage (6, 7) sont équipées d'au moins un ventilateur réglé en nombre de tours, avec lequel le courant volumique de l'air de cabine aspiré de la zone de pont supérieur (2) et de l'air mélangé soufflé dans la zone de climatisation peut être réglé de manière très précise, en aspirant au moins avec la soufflerie (72) réglée en nombre de tours de la seconde unité de recyclage exactement l'air mélangé acheminé à la zone de pont supérieur (2) par la première unité de recyclage fonctionnelle (6) pour établir un bilan du courant volumique compensé dans la zone de pont supérieur (2) et empêcher une accumulation ou une chute de pression dans la zone de pont supérieur (2) en évitant ainsi un échange d'air via le passage pressurisé (5).
